# FASCICULE DE BREVET EUROPEEN

(11) **EP 3 319 194 B1**
(45) Date de publication et mention de la délivrance du brevet: **20.10.2021**
(21) Numéro de dépôt: 17199273.8
(22) Date de dépôt: 30.10.2017
(51) Int. Cl.: H02H 9/04, H02H 9/06, H02H 7/24

(54) **DISPOSITIF DE PROTECTION CONTRE LES SURTENSIONS TRANSITOIRES**
SCHUTZVORRICHTUNG GEGEN VORÜBERGEHENDE ÜBERSPANNUNGEN
TRANSIENT SURGE PROTECTION DEVICE

(30) Priorité: 03.11.2016 FR 1660638
(43) Date de publication de la demande: 09.05.2018
(73) Titulaire: CITEL, 92310 Sèvres (FR)
(72) Inventeur: CREVENAT, Vincent, Pembroke Pines, FL 33024 (US); HUI, Wang, Shanghai, Shanghai 200083 (CN)
(74) Mandataire: Loyer & Abello

(56) Documents cités:
- CN-A- 101 950 956
- US-A1- 2006 139 832
- US-A1- 2014 092 514

## Description

### Domaine technique :

L'invention se rapporte au domaine des composants de protection contre les surtensions pour un équipement électrique.

### Arrière-Plan technologique :

Pour la protection d'un équipement électrique, il est d'usage d'utiliser, entre les deux lignes d'un secteur alternatif, une varistance à oxyde métallique, notamment à oxyde de zinc, montée en série d'une part avec un élément thermofusible de déconnexion, et d'autre part avec un éclateur à gaz.

Un tel dispositif fonctionne théoriquement de la manière suivante : l'éclateur à gaz supporte pratiquement toute la tension alternative du secteur. En effet, la capacité parasite de l'éclateur est de l'ordre du picofarad alors que la capacité parasite de la varistance est de quelques à quelques dizaines de nanofarads. Lorsque survient une surtension, elle provoque l'amorçage de l'éclateur à gaz, qui ne peut s'éteindre que si le courant, dit de suite, qui le traverse ultérieurement devient suffisamment faible. C'est la résistance de la varistance qui assure la limitation du courant de suite et permet l'extinction de l'éclateur à gaz.

Lorsqu'un dispositif de protection contre les surtensions a fonctionné un certain nombre de fois ou d'une manière continue suite à une surtension prolongée, ses composants arrivent en fin de vie. Pour un éclateur à gaz, la fin de vie correspond à une mise en court-circuit. En revanche, pour une varistance, la fin de vie peut se traduire par une explosion pour des phénomènes impulsionnels ou par une forte diminution de sa résistance interne (tendant vers le court-circuit) pouvant souvent aller jusqu'à son inflammation. Par mesure de sécurité, l'éclateur à gaz peut être conçu pour que son aptitude à écouler les impulsions énergétiques liées aux surtensions soit inférieure à celle de la varistance. De cette manière, c'est l'éclateur à gaz qui arrive le premier en fin de vie et qui se met en court-circuit.

La tension du secteur se trouve alors totalement reportée sur la varistance, qui s'échauffe et entraîne la fusion de l'élément thermofusible et la déconnexion thermique, c'est-à-dire la mise hors service du dispositif de protection.

Cependant, il est difficile de s'assurer de la fiabilité de la déconnexion produite par la fusion de l'élément thermofusible.

Le document US2014/092514 divulgue un système de protection selon le préambule de la revendication 1.

### Résumé de l'invention :

Une idée à la base de l'invention est de fournir un dispositif de protection contre les surtensions transitoires assurant une déconnexion totale en fin de vie des composants, par une action simultanée du système de déconnexion déconnectant tout les composants constituants le dispositif contre les surtensions transitoires.

Selon un mode de réalisation, l'invention fournit un système de protection contre les surtensions transitoires destiné à être disposé en dérivation d'un équipement à protéger, le système de protection comprenant au moins trois lignes constituées d'une première ligne, d'une deuxième ligne et d'une masse; le système de protection comprenant :
- un première, une deuxième et une troisième branches conductrices destinées à être raccordées respectivement aux trois lignes et qui comportent chacune une première extrémité destinée à être raccordée à l'une des trois lignes et une deuxième extrémité apte à être raccordée à la deuxième extrémité des deux autres branches conductrices ;
- la première et la deuxième branches conductrices étant équipées d'un premier et d'un deuxième éléments de protection sensibles à la tension ; chacun des premier et deuxième éléments de protection sensibles à la tension présentant deux bornes et étant agencé pour autoriser une circulation de courant entre la première et la deuxième extrémités de la branche conductrice respective lorsque la tension entre lesdites deux bornes est supérieure à un seuil de tension et pour inhiber une circulation de courant entre la première et la deuxième extrémités de la branche conductrice respective lorsque la tension entre lesdites deux bornes est inférieure au seuil de tension ; chaque élément de protection sensible à la tension étant apte à monter en température lorsque la tension entre ses bornes est supérieure audit seuil de tension ; et
- un dispositif de déconnexion thermosensible comportant au moins un élément thermofusible qui est en contact thermique avec au moins l'un des premier et deuxième éléments de protection sensibles à la tension ; l'élément thermofusible étant électriquement conducteur à température ambiante et étant apte à fondre au-delà d'un seuil de température ; l'élément thermofusible étant agencé de manière à maintenir les deuxièmes extrémités des trois branches dans une position connectée dans laquelle une connexion électrique est assurée entre les deuxièmes extrémités des première, deuxième et troisième branches conductrices ; le dispositif de déconnexion thermosensible comportant un dispositif de rappel élastique exerçant un effort tendant à amener les première, deuxième et troisième branches conductrices vers une position déconnectée dans laquelle les deuxièmes extrémités des première, deuxième et troisième branches conductrices sont placées à distance les unes des autres de manière à déconnecter simultanément les première, deuxième et troisième branches les unes des autres lors de la fusion de l'élément thermofusible.

Grâce à ces caractéristiques, des équipements électriques connectés à la première ligne électrique ou à la deuxième ligne électrique sont protégés contre les surtensions transitoires s'exerçant entre la première ligne électrique et la deuxième ligne électrique. Grâce à ces caractéristiques, le dispositif de protection contre les surtensions transitoires est protégé contre un éventuel incendie provoqué par la varistance quand elle arrive en fin de vie.

Le dispositif est particulièrement avantageux en ce qu'il éloigne physiquement les extrémités des première, deuxième et troisième branches conductrices à la fusion de la brasure, de sorte à ce que les contacts électriques soient simultanément rompus lors d'une élévation de température.

Il existe de nombreux équipements susceptibles d'être protégés par un dispositif de protection selon l'invention. Par exemple, les équipements électronique, téléphonique, informatique, photovoltaïque, d'éclairage à diodes électroluminescentes, éoliens, de radiocommunications et autres.

Selon des modes de réalisation, un tel dispositif comporte une ou plusieurs des caractéristiques suivantes :

Le système de protection contre les surtensions transitoires est apte à être disposé en dérivation d'un équipement à protéger comportant trois lignes ou plus.

Dans un mode de réalisation, le système de protection contre les surtensions transitoires est apte à être disposé en dérivation d'un équipement à protéger comportant quatre ou cinq lignes. Dans cet exemple, il comporte quatre branches conductrices dont les deuxièmes extrémités sont toutes connectées entre elles en étoile.

Par exemple, lorsque l'équipement à protéger comporte cinq lignes, les trois premières sont des lignes de phase, la quatrième est une ligne de neutre et la dernière une ligne de masse. Lorsque l'équipement à protéger comporte quatre lignes, les deux premières sont des lignes de phase, la troisième est une ligne de neutre et la dernière une ligne de masse.

Dans un mode de réalisation, le système de protection contre les surtensions transitoires est apte à être disposé en dérivation d'un équipement à protéger comportant trois lignes. Dans cet exemple, il comporte trois branches conductrices dont les deuxièmes extrémités sont connectées entre elles en Y.

Par exemple, les trois lignes sont des lignes de phase de neutre et de masse. Dans un autre exemple, les trois lignes sont des lignes de polarité positive, négative et une masse.

Dans un mode de réalisation, les deuxièmes extrémités des première, deuxième et troisième branches conductrices sont fixées les unes aux autres par l'élément thermofusible.

Dans un mode de réalisation, la deuxième extrémité de la première branche conductrice est formée par l'une des deux bornes du premier élément de protection sensible à la tension.

Dans un mode de réalisation, la deuxième extrémité de la deuxième branche conductrice est formée par l'une des deux bornes du deuxième élément de protection sensible à la tension.

Dans un mode de réalisation, la troisième branche conductrice est équipée d'un troisième élément de protection sensible à la tension présentant deux bornes et étant agencé pour autoriser une circulation de courant entre la première et la deuxième extrémités de la troisième branche conductrice lorsque la tension entre lesdites deux bornes est supérieure à un seuil de tension et pour inhiber une circulation de courant entre la première et la deuxième extrémités de la branche conductrice lorsque la tension entre lesdites deux bornes est inférieure au seuil de tension ; et étant en outre apte à monter en température lorsque la tension entre ses bornes est supérieure audit seuil de tension.

Dans un mode de réalisation, la deuxième extrémité de la troisième branche conductrice est formée par l'une des deux bornes du troisième élément de protection sensible à la tension.

Le premier, deuxième et troisième élément de protection peut être une varistance, un éclateur ou un élément semi-conducteur tel qu'une diode. Par exemple, les premier et deuxième éléments de protection sont des varistances et le troisième élément de protection est un éclateur. Par exemple, les trois éléments de protection sont des varistances.

Dans un mode de réalisation, les deuxièmes extrémités des première, deuxième et troisième branches conductrices peuvent se déplacer à distance les unes des autres.

Dans un mode de réalisation, le dispositif de rappel comporte un volet de déconnexion appuyé élastiquement sur les deuxièmes extrémités des trois branches conductrices en leur point de fixation afin d'exercer un effort tendant à éloigner les deuxièmes extrémités des trois branches conductrices les unes des autres.

Lors de la fusion de l'élément thermofusible, le volet de déconnexion s'insère entre les deuxièmes extrémités des trois branches conductrices. Le volet de déconnexion est réalisé en un matériau isolant électriquement, par exemple en plastique.

Dans un mode de réalisation, le premier et le deuxième élément de protection sont disposées de part et d'autre du volet de déconnexion.

Grâce à ces caractéristiques, l'élément thermofusible peut bénéficier de l'élévation de température de chacun des éléments de protection.

Dans un mode de réalisation, la première et la deuxième branche conductrice sont disposées de part et d'autre du volet de déconnexion.

Dans un mode de réalisation, deux des trois branches conductrices sont disposées dans une direction parallèle entre elles et la dernière des trois branches conductrices est disposée dans une direction perpendiculaire aux deux autres branches conductrices, les deuxièmes extrémités de chacune des branches conductrices étant inclinées les unes vers les autres de sorte à être maintenues entre elles par l'élément thermofusible, et le volet de déconnexion présente un profil biseauté selon trois pentes perpendiculaires les unes aux autres afin que ce profil soit complémentaire de l'ensemble formé par l'inclinaison de chacune des deuxièmes extrémités des branches conductrices et apte à s'insérer entre les trois deuxièmes extrémités des branches conductrices lors de la fusion de l'élément thermofusible.

Dans un mode de réalisation, l'élément thermofusible est une brasure thermofusible réalisée sur les trois deuxièmes extrémités des branches conductrices.

Dans un mode de réalisation, la deuxième extrémité de la troisième branche conductrice est intercalée entre les deuxièmes extrémités des première et deuxième branches conductrices et dans lequel le dispositif de rappel comporte un organe de rappel exerçant sur la deuxième extrémité de la troisième branche conductrice un effort tendant à éloigner ladite deuxième extrémité de la troisième branche conductrice des deuxièmes extrémités (7 et 9, 8) des première et deuxième branches conductrices.

Dans un mode de réalisation, les deuxièmes extrémités des première et deuxième branches conductrices sont placées à distance l'une de l'autre dans la position connectée.

Dans un mode de réalisation, l'élément thermofusible est une bille d'alliage solide à base d'étain assurant une connexion électrique entre les deuxièmes extrémités des première et deuxième branches conductrices et recouverte par un matériau thermofusible apte à fondre lors d'une élévation de température et à se répartir sur l'une des bornes de l'un et/ou l'autre des premier et deuxième éléments de protection sensible à la tension lors d'une élévation de température afin d'augmenter la mouillabilité de ladite borne pour l'alliage d'étain fondu.

Dans un mode de réalisation, le dispositif de rappel comporte en outre un organe de rappel exerçant sur la deuxième extrémité de la deuxième branche conductrice un effort tendant à éloigner la deuxième extrémité de la deuxième branche conductrice de la deuxième extrémité de la première branche conductrice.

Dans un mode de réalisation, le deuxième élément de protection est un éclateur à gaz dont l'une des deux bornes constitue la deuxième extrémité de la deuxième branche conductrice.

Dans un mode de réalisation, le dispositif de déconnexion thermosensible comporte un premier et un deuxième éléments thermofusibles le premier élément thermofusible étant disposé entre une première portion et une deuxième portion de la première branche conductrice ; la première portion et la deuxième portion comportant respectivement la première extrémité et la deuxième extrémité de la première branche conductrice; le deuxième élément thermofusible étant disposé entre une première portion et une deuxième portion de la deuxième branches conductrice ; la première portion et la deuxième portion comportant respectivement la première extrémité et la deuxième extrémité de la deuxième branche conductrice; le dispositif de rappel comportant un premier organe de rappel exerçant sur la deuxième portion de la première branche conductrice un effort tendant à l'éloigner de la première portion de la première branche conductrice de manière à séparer la première portion de la deuxième portion de la première branche conductrice lors de la fusion du premier élément thermofusible et un deuxième organe de rappel exerçant sur la deuxième portion de la deuxième branche conductrice un effort tendant à l'éloigner de la première portion de la deuxième branche conductrice de manière à séparer la première portion de la deuxième portion de la deuxième branche conductrice lors de la fusion du deuxième élément thermofusible ; la deuxième extrémité de la troisième branche conductrice étant en position connectée prise en sandwich entre les deuxièmes extrémités des première et deuxième branches conductrices ; le dispositif de rappel comportant en outre un troisième organe de rappel exerçant sur la deuxième extrémité de la troisième branche un effort tendant à éloigner la deuxième extrémité de la troisième branche conductrice des deuxièmes extrémités de la première et de la deuxième branche conductrice de manière à déplacer la deuxième extrémité de la troisième branche conductrice par rapport aux deuxièmes extrémités des première et deuxième branches conductrices lorsqu'en raison de la fusion de l'un et/ou l'autre des deux éléments thermofusibles la deuxième extrémité de la troisième branche conductrice n'est plus prise en sandwich entre les deuxièmes extrémités des première et deuxième branches conductrices.

Dans un mode de réalisation, la première et la deuxième branches conductrices comportent un troisième et un quatrième éléments de protection sensibles à la tension, le premier et le deuxième éléments de protection sensibles à la tension étant respectivement disposés sur la première portion de la première et de la deuxième branches conductrices et le troisième et le quatrième éléments de protection sensibles à la tension étant respectivement disposés sur la deuxième portion de la première et de la deuxième branches conductrices.

Dans un mode de réalisation, le premier élément thermofusible est fixé entre l'une des bornes du premier élément de protection sensible à la tension et l'une des bornes du troisième élément de protection sensible à la tension et dans lequel le deuxième élément thermofusible est fixé entre l'une des bornes du deuxième élément de protection sensible à la tension et l'une des bornes du quatrième élément de protection sensible à la tension.

Dans un mode de réalisation, les éléments de protection sensibles à la tension sont choisis parmi les varistances, les éclateurs et les semiconducteurs.

Dans un mode de réalisation, les premier et deuxième éléments de protection sensibles à la tension sont des varistances et dans le troisième et le quatrième élément de protection sensible à la tension sont des éclateurs à gaz.

Dans un mode de réalisation, la deuxième extrémité de la première branche conductrice est formée par l'une des deux bornes du troisième élément de protection sensible à la tension.

Dans un mode de réalisation, la deuxième extrémité de la deuxième branche conductrice est formée par l'une des deux bornes du quatrième élément de protection sensible à la tension.

Dans un mode de réalisation, la première extrémité de la première branche conductrice est destinée à être raccordée à la phase.

Dans un mode de réalisation, la première extrémité de la deuxième branche conductrice est destinée à être raccordée au neutre ou à la masse.

Dans un mode de réalisation, les premier et deuxième éléments de protection sensibles à la tension sont des varistances, les premières et deuxièmes branches conductrices sont destinées à être connectées aux phases ou au neutre et la phase, et la troisième branche conductrice est destinée à être directement connectée au neutre ou à la masse. Dans ce mode de réalisation, la troisième branche conductrice ne comporte pas d'élément de protection.

Dans un mode de réalisation, le dispositif comporte en outre un boitier dans lequel est agencé le dispositif. Grâce à ces caractéristiques, le dispositif est compact.

Des soudures ou brasures réalisées entre n'importe quelle paire d'éléments du composant sélectionnés parmi les bornes de connexion, les électrodes d'éclateur ou de varistances sont des soudures ou brasures conductrices d'électricité. Dans un mode de réalisation, les soudures ou brasures sont réalisées en métal dont la température de fusion est supérieure à la température de fusion de la brasure thermofusible.

Dans un mode de réalisation, la brasure thermofusible comporte un alliage dont l'étain est le principal constituant. L'alliage comporte également un ou plusieurs éléments sélectionnés dans la liste constituant en : Pb, Cu, Zn, Ag, Bi, In, Sb afin de sélectionner une température de fusion de la brasure thermofusible qui soit plus basse que la température de fusion de l'étain. Par exemple, la brasure thermofusible comporte l'un des alliages sélectionnés dans la liste constituant en : SnPbAg, SnCuAg, et SnBi.

Selon un mode de réalisation, la (les) varistance (s) est (sont) réalisé (es) en oxyde métallique.

Selon un mode de réalisation, le (les) éclateur (s) est (sont) un (des) éclateur (s) à gaz, également appelé en anglais « gas discharge tube (GDT) » ou « Gas-filled Spark Gap (GSG ) ».

Selon un mode de réalisation, le (les) semi-conducteur (s) est (sont) une (des) diode (s) à avalanche également appelé en anglais Avalanche Breaking Diodes (ABD).Selon un mode de réalisation, la (les) varistance (s) est (sont) sélectionnée (s) parmi le groupe comprenant une varistance de toute forme dimensionnelle possible, par exemple de forme circulaire, tubulaire, rectangulaire, carrée ou diverses autres formes.

Selon un mode de réalisation, la (les) varistance (s) est (sont) une (des) varistance (s) à oxyde de zinc (ZnO).

### Description brève des figures :

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.

Sur ces dessins :
La figure 1 est un schéma électrique d'un système de protection contre les surtensions selon un premier mode de réalisation de l'invention,
La figure 2 est une vue de face schématique du système de protection de la figure 1,
La figure 3 est une vue de face schématique du système de protection de la figure 1,
La figure 4 est un schéma électrique d'un système de protection contre les surtensions selon un deuxième mode de réalisation de l'invention,
La figure 5 est une vue schématique du système de protection de la figure 4,
La figure 6 est un schéma électrique d'un système de protection contre les surtensions selon un troisième mode de réalisation de l'invention,,
La figure 7 est une vue schématique du système de protection de la figure 6,
La figure 8 est un schéma électrique d'un système de protection contre les surtensions selon un quatrième mode de réalisation de l'invention,
La figure 9 est une vue en perspective du système de protection contre les surtensions de la figure 8, dans un état connecté,
La figure 10 est une vue en perspective du système de protection contre les surtensions de la figure 8, dans un état déconnecté,
La figure 11 est une vue en perspective d'un système de protection contre les surtensions selon un cinquième mode de réalisation du système de protection contre les surtensions

### Description détaillée de l'invention :

Plusieurs modes de réalisation d'un système 1 destiné à protéger un équipement électrique contre les surtensions vont maintenant être présentés en référence aux figures.

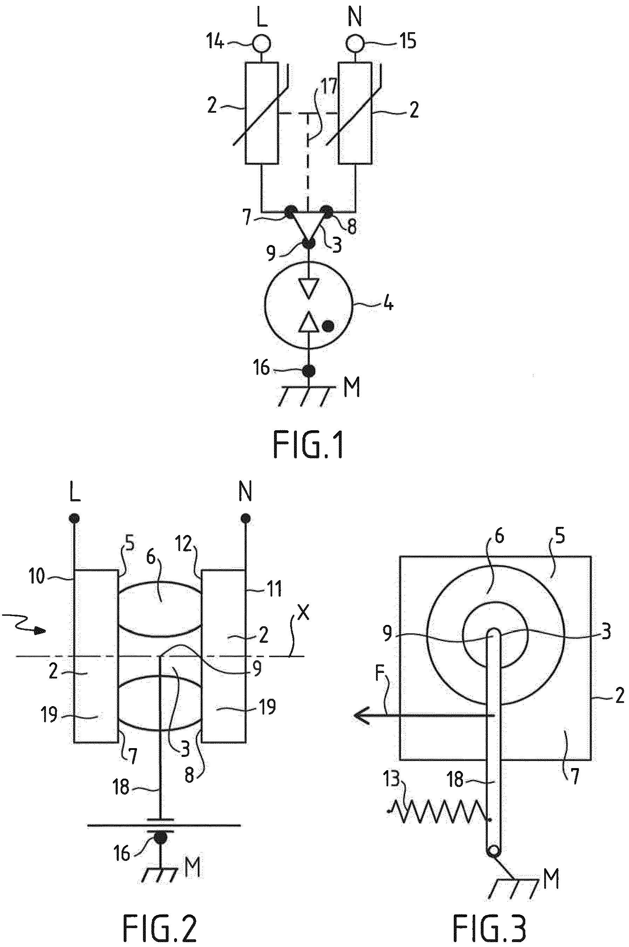

Le schéma électrique d'un dispositif de protection 1 selon un premier mode de réalisation de l'invention va être décrit en relation avec la figure 1. Le dispositif 1 comporte un éclateur 4 présentant une première borne électrique 16 et une deuxième borne électrique 9. Le dispositif 1 comporte en outre une première varistance présentant une première borne électrique 14 et une deuxième borne électrique 7, ainsi qu'une deuxième varistance 2 présentant une première borne électrique 15 Set une deuxième borne électrique 8.

L'éclateur 4 et les deux varistances 2 sont connectés entre eux par l'une de leur borne électrique de sorte à former un schéma électrique en Y. Plus précisément, la première borne électrique 16 de l'éclateur 4 est connectée à la masse M et les premières bornes électriques respectives 14, 15 des varistances 2 sont respectivement connectées à une borne électrique L et une borne électrique N destinées à connecter deux lignes électriques du circuit ou équipement électrique à protéger.

L'éclateur 4 et les deux varistances 2 sont connectés entre eux par leurs deuxièmes bornes électriques respectives 7, 8 et 9 par l'intermédiaire d'une brasure thermofusible 3.

Les lignes électriques peuvent être tout conducteur servant à amener de l'énergie électrique sous une tension basse ou moyenne à un équipement électrique. Un pont thermique 7 permet de diffuser la chaleur émise par les varistances 2 vers la brasure thermofusible 3.

A présent, la structure mécanique du dispositif de protection 1 de la figure 1 va être décrite en référence aux Figures 2 et 3.

Les deux varistances 2 sont des varistance de forme rectangulaire comprenant chacune une galette d'oxyde de zinc rectangulaire et une paire d'électrodes respectives 10, 5 et 11, 12 également rectangulaires placées de part et d'autre de la galette d'oxyde de zinc 19, comme représenté sur la figure 2.

Le dispositif 1 comporte également un éclateur à gaz 4 (non représenté sur les figures 2 et 3).

Dans un état connecté du dispositif 1 représenté sur les figures 2 et 3, les deux varistances 2 sont positionnées dans deux plans parallèles à faible distance l'une de l'autre. La première électrode 10 de la première varistance 2 correspond à la borne électrique 14. La deuxième électrode 5 de la première varistance 2 correspond à la borne électrique 7. La première électrode 12 de la deuxième varistance 2 correspond à la borne électrique 15, et la deuxième électrode 11 de la deuxième varistance 2 correspond à la borne électrique 8.

Les électrodes 5 et 12 sont fixées et électriquement connectées entre elles par l'intermédiaire de la brasure thermofusible 3.

La brasure thermofusible 3 est un tronçon sensiblement cylindrique d'axe X perpendiculaire aux plans des varistances 2. la brasure thermofusible 3 est réalisée en métal conducteur et chaque extrémité du tronçon est respectivement soudée à l'une des électrodes 5 et 12.

L'éclateur 4 (non représenté) est fixé et électriquement connecté à une tige métallique conductrice 18 présentant deux extrémités. La tige métallique conductrice 18 est disposée dans un plan parallèle aux deux varistances 2, à distance des électrodes 5 et 12 et entre les deux varistances 2.

La brasure thermofusible emprisonne et connecte électriquement la première extrémité de la tige métallique conductrice 18, correspondant à la borne électrique 9. La deuxième extrémité correspond à la borne électrique 16.

Un ressort 13 exerce une force de rappel F sur la tige métallique conductrice 18 dans une direction transversale à l'axe X.

Ainsi, lors d'une surtension dépassant un seuil prédéterminé du dispositif 1, les varistances 2 produisent une élévation de température se transmettant à la brasure thermofusible 3 par l'intermédiaire du pont thermique 17.

Cette élévation de température conduit à la fonte de la brasure thermofusible 3 qui n'est plus à même de maintenir la première extrémité de la tige métallique conductrice 18, arrachée par la force de rappel F exercée par le ressort 13. Simultanément, la brasure thermofusible 3 n'assure plus la connexion électrique entre les électrodes 5 et 12.

En effet, la brasure thermofusible 3 est entourée d'un matériau thermoactif 6 sur sa surface cylindrique. Le matériau thermoactif 6 est apte à fondre lors d'une élévation de température inférieure à la température de fusion de la brasure thermofusible 3.

Le matériau thermoactif 6 permet d'augmenter le coefficient d'étalement de la brasure thermofusible 3 à l'état liquide sur les électrodes 5 et 12 afin que la brasure thermofusible 3 se transforme en pellicule métallique inapte à assurer la connexion électrique entre les électrodes 5 et 12.

Ainsi, soit lors d'une élévation de température due à une élévation de tension, supérieure à un seuil prédéterminé du dispositif 1 ou à l'usure du dispositif 1, la fonte de la brasure thermofusible 3 a pour conséquence une déconnexion électrique simultanée des bornes électriques 7, 8 et 9.

Le dispositif 1 passe alors dans un état déconnecté (non représenté) dans lequel les bornes électriques 7, 8 et 9 sont placées à distances les unes des autres.

Dans une variante du mode de réalisation représenté aux figures 1 à 3, l'éclateur est remplacé par une connexion conductrice. Le fonctionnement de la déconnexion est inchangé.

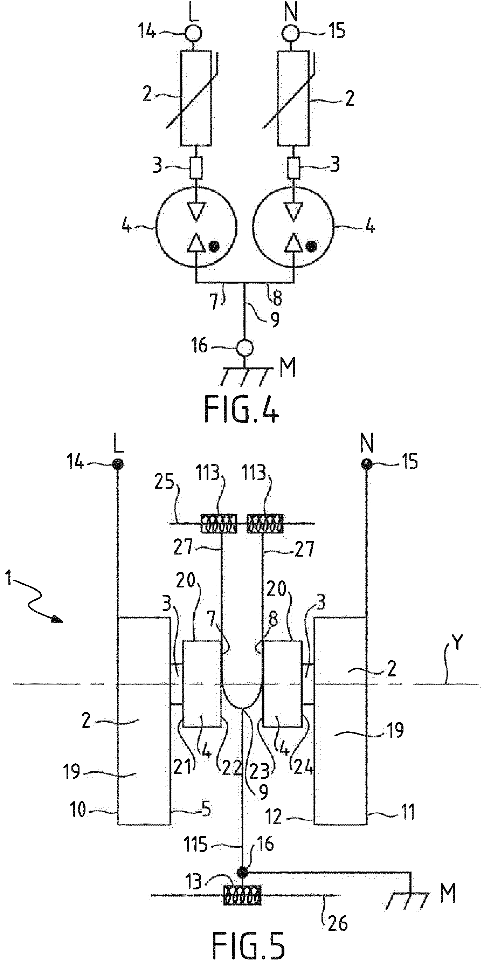

Un deuxième mode de réalisation de l'invention va être présenté en référence aux figures 4 et 5.

Le schéma électrique d'un dispositif de protection 1 selon le deuxième mode de réalisation de l'invention va être décrit en relation avec la figure 1.

Le dispositif 1 comporte deux ensembles composé chacun d'un éclateur 4 et d'une varistance 2 en série. Dans chaque ensemble, la varistance 2 et l'éclateur 4 sont connectés électriquement par l'intermédiaire d'une brasure thermofusible 3. L'éclateur 4 est également fixé mécaniquement à la varistance 2 par la brasure thermofusible 3.

Le premier ensemble présente une première borne électrique 14 et une deuxième borne électrique 7. Le deuxième ensemble présente une première borne électrique 15 et une deuxième borne électrique 8.

Les premières bornes électriques 14 et 15 des varistances 2 sont respectivement connectées à une borne électrique L et une borne électrique N destinées à connecter deux lignes électriques du circuit ou équipement électrique à protéger.

Les deuxièmes bornes électriques 7 et 8 sont connectées électriquement avec une borne électrique 9 connectée à la masse par une borne électrique 16.

La figure 5 représente la structure du dispositif 1 de la figure 4, dans une position connectée.

Les deux varistances 2 sont de constitution identique à celles décrites en référence à la figure 2, et les chiffres de référence désignant les mêmes éléments sont identiques.

Les deux varistances 2 sont éloignées l'une de l'autre. L'électrode 5 de la première varistance fait face à l'électrode 12 de la deuxième varistance. Les deux éclateurs 4 comportent chacun un corps d'éclateur 20 sensiblement cylindrique et deux électrodes d'éclateur. Le premier éclateur 4 présente une première électrode d'éclateur 21 et une deuxième électrode d'éclateur 22 de part et d'autre du corps d'éclateur 20. Le deuxième éclateur 4 présente une première électrode d'éclateur 24 et une deuxième électrode d'éclateur 23 de part et d'autre du corps d'éclateur 20.

Les électrodes 21, 22, 23 et 24 ont une forme de disque et sont disposées sur les corps d'éclateur 4 dans des plans perpendiculaires à l'axe Y des corps d'éclateur 4 cylindriques.

Chaque corps d'éclateur 20 est apte à générer un arc électrique entre les deux électrodes situées de part et d'autre du corps d'éclateur 20 et à s'échauffer lorsque la tension imposée entre les deux électrodes dépasse un seuil.

Le dispositif 1 comporte en outre deux tiges 27 disposées dans un plan perpendiculaire à l'axe Y. Chacun des deux éclateurs 4 est fixé à une première extrémité d'une tige 27 respective.

La deuxième extrémité de chacune des deux tiges est montée en rotation autour d'un axe de rotation de tige 25. L'axe de rotation de tige 25 est parallèle à l'axe Y. Des ressorts 113 exercent une force de rotation d'axe 25 sur les tiges 27.

La première électrode 21 du premier éclateur 4 est mécaniquement fixée et électriquement connectée à la deuxième électrode 5 de la première varistance 2. Pour cela, l'électrode 21 est disposée sur l'électrode 5 de sorte à ce que les deux surfaces des électrodes 21 et 5 soient au contact. Les deux surfaces sont soudées par une brasure thermofusible 3. La première électrode d'éclateur 24 du deuxième éclateur 4 est fixée et connectée de la même façon à l'électrode 12 de la deuxième varistance 2.

De la sorte, les deuxièmes électrodes 22 et 23 des éclateurs 4 sont dans des plans parallèles séparés d'une distance prédéterminée et se font face.

Les ressorts 113 exercent un effort élastique sur les éclateurs 4 tendant à arracher les deux éclateurs 4 des varistances 2 pour les déplacer à distance des électrodes 5 et 12.

Le dispositif 1 comporte en outre une tige métallique conductrice 115.

La tige métallique conductrice 115 est électriquement connectée par une première extrémité à la borne électrique 16.

La première extrémité de la borne métallique conductrice est élastiquement montée en rotation autour d'un axe de rotation 26 parallèle à l'axe Y. La tige métallique conductrice 115 est disposée dans un plan perpendiculaire aux axes 26 et Y.

La deuxième extrémité de la tige métallique conductrice 115 est équipée d'un ressort à lame métallique en forme de U fixé à la deuxième extrémité par le centre du U. Le ressort à lame élastique correspond à la borne électrique 9.

La deuxième extrémité de la tige métallique conductrice 115 est disposée dans l'espace entre les deuxièmes électrodes 22 et 23 des éclateurs 4 de sorte à ce que les branches du U soient élastiquement en appui sur les deuxièmes électrodes 22 et 23 des éclateurs 4.

Ainsi, les branches du U assurent une connexion électrique entre les deuxièmes électrodes 22 et 23 des éclateurs 4 et la borne électrique 16.

Un ressort 13 exerce une force de rappel tendant à éloigner la deuxième extrémité de la tige métallique conductrice 115 des éclateurs 4, tandis que les branches du U maintiennent élastiquement la deuxième extrémité de la tige métallique conductrice 115 entre les deuxièmes électrodes 22 et 23 des éclateurs 4.

Préférentiellement, les ressorts 13 exercent une force de rappel dans un sens de rotation opposé aux ressorts 113.

Le dispositif 1 passe de la position connectée à la position déconnectée lors de la fusion des brasures thermofusibles 3. Lors de la fusion des brasures thermofusibles 3, les tiges 27 entraînent les éclateurs 4 à distance des varistances 2, coupant ainsi toute connexion électrique entre les bornes électriques 14 et 15.

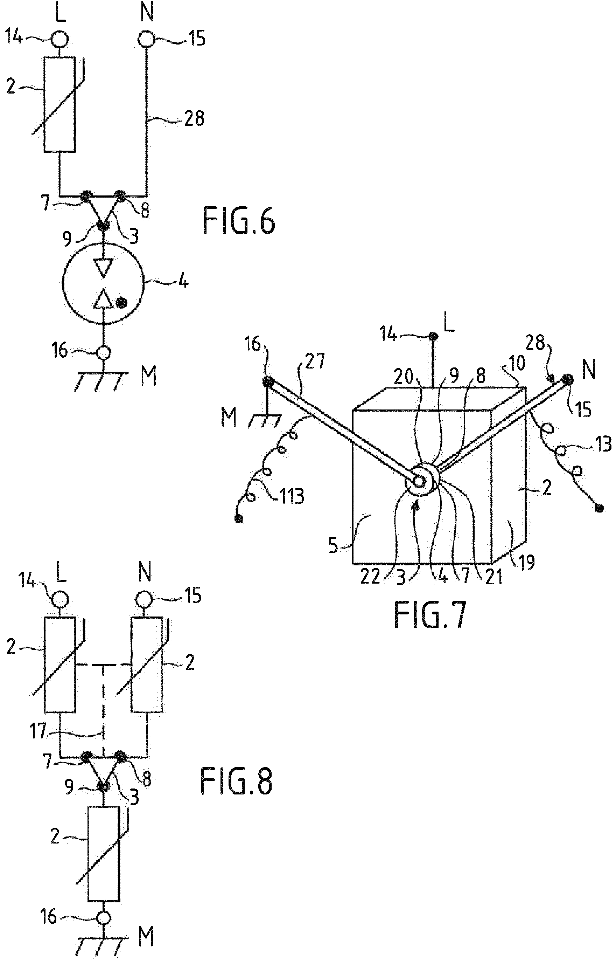

Le schéma électrique d'un dispositif de protection 1 selon un troisième mode de réalisation de l'invention va être décrit en relation avec la figure 6. Le dispositif 1 comporte un éclateur 4 présentant une première borne électrique 16 et une deuxième borne électrique 9. Le dispositif 1 comporte en outre une varistance 2 présentant une première borne électrique 7 et une deuxième borne électrique 14. Le dispositif 1 comporte également une branche conductrice d'électricité 28 présentant une première borne électrique 15 et une deuxième borne électrique 8.

L'éclateur 4, la varistance 2 et la branche conductrice d'électricité 28 sont connectés entre eux par l'une de leur borne électrique de sorte à former un schéma électrique en Y. Plus précisément, la première borne électrique 16 de l'éclateur 4 est connectée à la masse M et la première borne électrique 14 de la varistance 2 est connectée à une borne électrique L. La première borne électrique 15 de la branche conductrice d'électricité 28 est connectée à une borne électrique N.

La borne électrique L et la borne électrique N sont destinées à connecter deux lignes électriques du circuit ou équipement électrique à protéger

L'éclateur 4, la varistance 2 et la branche conductrice d'électricité 28 sont connectés entre eux par leurs deuxièmes bornes électriques respectives 7, 8 et 9 par l'intermédiaire d'une brasure thermofusible 3.

A présent, la structure mécanique du dispositif de protection 1 de la figure 6 va être décrite en référence à la Figure 7.

La varistance 2 est une varistance de forme rectangulaire comprenant une galette d'oxyde de zinc rectangulaire et une paire d'électrodes 10 et 5 placées de part et d'autre de la galette d'oxyde de zinc 19, comme représenté sur la figure 7.

Le dispositif 1 comporte également un éclateur à gaz 4. L'éclateur à gaz 4 comporte un corps d'éclateur 20 sensiblement cylindrique et deux électrodes d'éclateur 21 et 22 en forme de disque perpendiculaire à l'axe du corps d'éclateur 20. La première électrode d'éclateur 21 et la deuxième électrode d'éclateur 22 sont disposées de part et d'autre du corps d'éclateur 20. La deuxième électrode 10 de varistance 2 correspond à la borne électrique 14.

La première électrode 21 de l'éclateur 4 est mécaniquement fixée et électriquement connectée à la deuxième électrode 5 de la varistance 2.

La branche conductrice 28 est constituée d'une tige métallique rigide. Une première extrémité de la branche conductrice 28 est mécaniquement fixée et électriquement connectée à la première électrode 21 de l'éclateur 4 et à la deuxième électrode 5 de la varistance 2.

Pour cela, l'extrémité 8 de la branche conductrice 28 est disposée entre l'électrode 21 et l'électrode 5 tandis que l'électrode 21 et l'électrode 5 sont disposées dans deux plans parallèles proches l'un de l'autre.

Ainsi, l'extrémité 8 de la branche conductrice 28 est au contact des deux surfaces des électrodes 21 et 5. Les électrodes 21 et 5 et l'extrémité de la branche conductrice 28 sont soudées par une brasure thermofusible 3.

La branche conductrice 28 est également fixée à l'extrémité d'un ressort 13 apte à exercer sur l'extrémité de la branche conductrice 28 une force de rappel élastique dans un plan perpendiculaire à l'axe du corps cylindrique 20. La force de rappel élastique tend à arracher l'extrémité de la branche conductrice 28 de sa position entre les deux électrodes 21 et 5.

Le dispositif 1 comporte en outre une tige métallique 27 conductrice d'électricité. La tige métallique 27 est disposée dans un plan perpendiculaire à l'axe du corps cylindrique 20. La tige métallique 27 correspond à la borne électrique 16.

La deuxième électrode 22 de l'éclateur 4 est soudée sur l'extrémité de la tige métallique 27.

La tige métallique 27 est également fixée à l'extrémité d'un ressort 113 apte à exercer sur l'extrémité de la tige métallique 27 une force de rappel élastique dans un plan perpendiculaire à l'axe du corps cylindrique 20. La force de rappel élastique tend à arracher l'éclateur 4 de sa position sur la l'extrémité 8 de la branche conductrice 28.

Ainsi, lors d'une fusion de la brasure thermofusible 3, l'extrémité 8 de la branche conductrice 28 et les deux surfaces des électrodes 21 et 5 sont déconnectées simultanément par l'éloignement simultané de l'extrémité 8 de la branche conductrice 28 d'un côté et de l'éclateur 4 de l'autre.

Le schéma électrique d'un dispositif de protection 1 selon un quatrième mode de réalisation de l'invention va être décrit en relation avec la figure 8.

Le schéma électrique du dispositif de protection 1 selon le quatrième mode de réalisation est presque en tout point identique à celui de la figure 1. Les éléments identiques sont identifiés par les mêmes chiffres de référence. Le schéma électrique du dispositif de protection 1 selon le quatrième mode de réalisation présente une différence avec celui de la Figure 1, en ce qu'il n'y a pas d'éclateur 4 connectant les bornes électriques 9 et 16, mais une varistance 2.

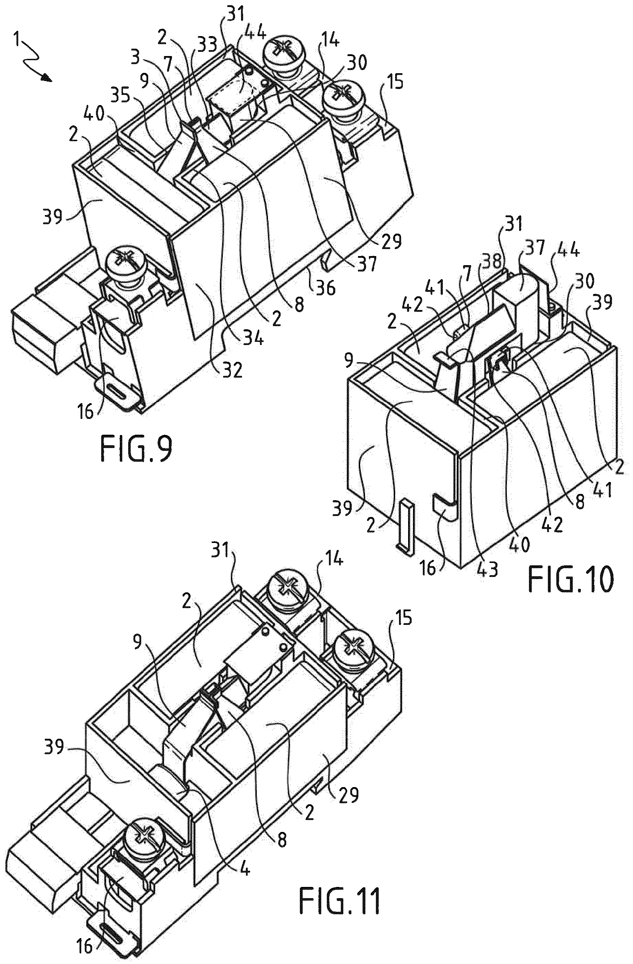

Le dispositif de protection 1 représenté sur les Figures 9 et 10 présente le schéma électrique représenté sur la Figure 8.

Le dispositif 1 est agencé dans un boitier 32 réalisé en plastique. Le boitier 32 est compartimenté. Le boitier 32 présente trois compartiments 29, 30 et 31 sous la forme de parallélépipèdes rectangles parallèles entre eux, adjacents et séparés par des cloisons. Le boitier 32 présente un fond 36 commun aux trois compartiments 29, 30 et 31.

Le compartiment central 30 présente deux cloisons parallèles 34 et 35 le séparant des compartiments 29 et 30.

Les compartiments 29 et 31 comportent chacun une varistance 2 de forme rectangulaire comprenant chacune une galette d'oxyde de zinc rectangulaire et une paire d'électrodes respectives également rectangulaires placées de part et d'autre de la galette d'oxyde de zinc 19.

Les compartiments 29 et 31 sont dimensionnés de sorte à recevoir les varistances 2 sans jeu entre les cloisons des compartiments et les électrodes des varistances.

Le dispositif 1 comporte en outre un organe de déconnexion apte à séparer les deuxièmes bornes électriques respectives 7, 8 et 9 des trois varistance 2 lors d'une fonte de la brasure thermofusible 3. L'organe de déconnexion est disposé dans le compartiment central 30.

L'organe de déconnexion comporte un ressort (non représenté) qui coopère avec un isolateur en plastique 33 agissant comme volet de déconnexion.

L'isolateur en plastique 33 présente une forme sensiblement rectangulaire adaptée aux dimensions du compartiment central 30.

L'isolateur en plastique 33 présente une surface de fond coopérant avec le ressort placé contre le fond 36 du compartiment central 30 de sorte à exercer une force de rappel élastique tendant à extraire l'isolateur en plastique 33 du compartiment central 30 en le faisant coulisser entre les deux cloisons parallèles 34 et 35.

L'isolateur en plastique 33 présente en outre un taquet 37 sur une portion de la surface opposée à la surface de fond de l'isolateur en plastique 33.

L'isolateur en plastique 33 présente en outre une forme en lame d'insertion sur l'autre portion de la surface opposée à la surface de fond de l'isolateur en plastique 33. La forme en lame d'insertion présente deux pentes parallèles de part et d'autre d'une ligne de sommet 38 parallèle aux électrodes des varistance 2 des compartiments 29 et 31 et une troisième pente perpendiculaire aux deux premières. La troisième pente est du côté opposé au taquet 37 sur la surface opposée à la surface de fond.

Le dispositif 1 comporte en outre un quatrième compartiment 39 ayant une cloison 40 commune avec chacun des compartiments 29, 30 et 31.

Le compartiment 39 comporte une varistance 2 de forme rectangulaire similaire à celles des compartiments 29 et 31 et est dimensionné de sorte à recevoir la varistances 2 sans jeu entre ses parois et les électrodes des varistances. La varistance 2 du compartiment 39 est disposée perpendiculairement aux varistances 2 des compartiments 29 et 31. Une des électrodes de la varistance 2 est accolée à la cloison 40.

L'isolateur en plastique 33 est orienté de sorte à ce que la troisième pente soit orientée vers la cloison 40.

Les compartiments 29, 31 et 39 comportent chacun un orifice par lequel les deuxièmes électrodes des varistances 2 sont connectées aux bornes électriques respectives 14, 15 et 16.

Le dispositif 1 comporte en outre trois lames métalliques flexibles. Chacune des lames métalliques est soudée par une première extrémité sur la première électrode d'une des trois varistances 2 de sorte à dépasser des compartiments 29, 31 et 39 du côté opposé au fond 36.

Chacune des lames métalliques correspond à une des bornes électriques 7, 8 et 9.

Le dispositif 1 est représenté dans une position connectée sur la Figure 9. Sur la Figure 9, chacune des lames métalliques est fixée par une deuxième extrémité aux deux autres lames métalliques par l'intermédiaire d'une brasure thermofusible 3.

La deuxième extrémité des lames métalliques soudées sur les varistances des compartiments 29 et 31 est recourbée de sorte à présenter chacune une portion de surface plane 41 parallèle aux cloisons 34 et 35. Les deux surfaces planes 41 sont disposées l'une sur l'autre.

La deuxième extrémité des lames métalliques soudées sur les varistances des compartiments 29 et 31 est recourbée de sorte à présenter chacune une portion de surface plane 42 parallèle à la cloison 40 et orientée vers la cloison 40.

La deuxième extrémité de la lame métallique soudée sur la varistance 2 du compartiment 39 est recourbée de sorte à présenter une surface plane 43 parallèle à la cloison 40. La surface plane 43 est disposée sur les surfaces planes 42.

Les surfaces planes 41, 42 et 43 sont soudées entre elles par la brasure thermofusible 3.

Les pentes de l'isolateur en plastique 33 sont au contact des lames métalliques fixées entre elles par la brasure thermofusible 3, de sorte à ce que les lames métalliques maintiennent l'isolateur en plastique 33 dans le compartiment central 30.

Le dispositif 1 comporte en outre une languette 44 pliable fixée sur une cloison du boitier 32. La languette 44 coopère avec le taquet 37 de l'isolateur en plastique 33 de sorte à maintenir l'isolateur en plastique 33 dans le compartiment central 30.

Lors d'un échauffement du dispositif 1, la brasure thermofusible 3 fond et le ressort placé au fond 36 du boitier 32 repousse l'isolateur en plastique 33 en le faisant coulisser dans le compartiment central 30.

Les pentes de l'isolateur en plastique 33 agissent en lame d'insertion repoussant chacune des deuxièmes extrémités des lames métalliques, de sorte à ce que les bornes électriques 7, 8 et 9 soient déconnectées simultanément les unes des autres.

Simultanément, la languette pliable 44 se replie pour ne plus faire obstacle au taquet 37.

Ainsi, le dispositif 1 passe dans la position déconnectée représentée sur la Figure 10, dans laquelle les bornes électriques 7, 8 et 9 sont déconnectées.

La disposition des varistances 2 autour de la brasure thermofusible 3 est particulièrement avantageuse en ce que la brasure thermofusible 3 est sensible à l'élévation de température de chacune des varistances 2, ce qui rend le dispositif 1 plus sensible à la déconnexion thermique.

Un cinquième mode de réalisation du dispositif 1 est représenté en référence à la Figure 11. Le dispositif 1 présente le même schéma électrique que celui représenté sur la Figure 1.

Le mode de réalisation du dispositif représenté sur la Figure 11 est similaire à celui représenté sur les Figures 9 et 10 à l'exception près que le compartiment 39 comporte un éclateur 4 et non une varistance 2. Les chiffres de références des éléments identiques sont inchangés. Les électrodes de l'éclateur 4 sont connectées de la même manière que les électrodes de la varistance 2 du compartiment 39 du dispositif 1 des Figures 9 et 10.

Le mode de réalisation du dispositif représenté sur la Figure 11 fonctionne de la même manière que celui représenté sur les Figures 9 et 10 en ce qui concerne le passage du dispositif 1 d'un état connecté à un état déconnecté.

Dans une variante des modes de réalisation représentés en référence aux Figures 9 à 11, l'éclateur 4 peut être remplacé par une connexion conductrice. Le fonctionnement de la déconnexion est inchangé.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes.

Dans les revendications, tout signe de référence entre parenthèses ne saurait être interprété comme une limitation de la revendication.

## Revendications

1. Système de protection contre les surtensions transitoires (1) destiné à être disposé en dérivation d'un équipement à protéger, le système de protection comprenant au moins trois lignes (L, N, M) constituées d'une première ligne (L), d'une deuxième ligne (N) et d'une masse (M); le système de protection (1) comprenant :
- un première, une deuxième et une troisième branches conductrices destinées à être raccordées respectivement aux trois lignes (L, N, M) et qui comportent chacune une première extrémité (14, 15, 16) destinée à être raccordée à l'une des trois lignes (L, N, M) et une deuxième extrémité (7, 8, 9) apte à être raccordée à la deuxième extrémité (7, 8, 9) des deux autres branches conductrices ;
- la première et la deuxième branches conductrices étant équipées d'un premier (2) et d'un deuxième éléments de protection (2, 4) sensibles à la tension ; chacun des premier et deuxième éléments de protection sensibles à la tension présentant deux bornes (5, 10 ; 11, 12) et étant agencé pour autoriser une circulation de courant entre la première et la deuxième extrémités (7,14) de la branche conductrice respective lorsque la tension entre lesdites deux bornes est supérieure à un seuil de tension et pour inhiber une circulation de courant entre la première et la deuxième extrémités (7,14) de la branche conductrice respective lorsque la tension entre lesdites deux bornes est inférieure au seuil de tension ; chaque élément de protection (2, 4) sensible à la tension étant en outre apte à monter en température lorsque la tension entre ses bornes (5, 10) est supérieure audit seuil de tension ; et
- un dispositif de déconnexion thermosensible comportant au moins un élément thermofusible (3) qui est en contact thermique avec au moins l'un des premier et deuxième éléments (2, 4) de protection sensibles à la tension ; l'élément thermofusible (3) étant électriquement conducteur à température ambiante et étant apte à fondre au-delà d'un seuil de température ; le système de protection étant **caractérisé en ce que** l'élément thermofusible (3) est agencé de manière à maintenir les deuxièmes extrémités (7, 8, 9) des trois branches dans une position connectée dans laquelle une connexion électrique est assurée entre les deuxièmes extrémités (7, 8, 9) des première, deuxième et troisième branches conductrices ; le dispositif de déconnexion thermosensible comportant un dispositif de rappel élastique exerçant un effort tendant à amener les première, deuxième et troisième branches conductrices vers une position déconnectée dans laquelle les deuxièmes extrémités (7, 8, 9) des première, deuxième et troisième branches conductrices sont placées à distance les unes des autres de manière à déconnecter simultanément les première, deuxième et troisième branches les unes des autres lors de la fusion de l'élément thermofusible (3).

2. Système de protection (1) selon la revendication 1, dans lequel les deuxièmes extrémités (7, 8, 9) des première, deuxième et troisième branches conductrices sont fixées les unes aux autres par l'élément thermofusible (3).

3. Système de protection (1) selon la revendication 1 ou 2, la troisième branche conductrice étant équipée d'un troisième élément de protection sensible à la tension présentant deux bornes et étant agencé pour autoriser une circulation de courant entre la première et la deuxième extrémités de la troisième branche conductrice lorsque la tension entre lesdites deux bornes est supérieure à un seuil de tension et pour inhiber une circulation de courant entre la première et la deuxième extrémités de la branche conductrice lorsque la tension entre lesdites deux bornes est inférieure au seuil de tension ; et étant en outre apte à monter en température lorsque la tension entre ses bornes est supérieure audit seuil de tension.

4. Système de protection (1) selon la revendication 2 ou 3, dans lequel les deuxièmes extrémités (7, 8, 9) des première, deuxième et troisièmes branches conductrices peuvent se déplacer à distance les unes des autres.

5. Système de protection (1) selon la revendication 4, dans lequel le dispositif de rappel comporte un volet de déconnexion appuyée élastiquement sur les deuxièmes extrémités (7, 8, 9) des trois branches conductrices en leur point de fixation afin d'exercer un effort tendant à éloigner les deuxièmes extrémités (7 et 9, 8) des trois branches conductrices les unes des autres.

6. Système de protection (1) selon la revendication 5, dans lequel le premier et le deuxième élément de protection sont disposées de part et d'autre du volet de déconnexion.

7. Système de protection (1) selon l'une quelconque des revendications 4 à 6, dans lequel la première et la deuxième branche conductrice sont disposées de part et d'autre du volet de déconnexion.

8. Système de protection (1) selon l'une quelconque des revendications 4 à 7, dans lequel deux des trois branches conductrices sont disposées dans une direction parallèle entre elles et la dernière des trois branches conductrices est disposée dans une direction perpendiculaire aux deux autres branches conductrices, les deuxièmes extrémités de chacune des branches conductrices étant inclinées les unes vers les autres de sorte à être maintenues entre elles par l'élément thermofusible, et le volet de déconnexion présente un profil biseauté selon trois pentes perpendiculaires les unes aux autres afin que ce profil soit complémentaire de l'ensemble formé par l'inclinaison de chacune des deuxièmes extrémités des branches conductrices et apte à s'insérer entre les trois deuxièmes extrémités des branches conductrices lors de la fusion de l'élément thermofusible.

9. Système de protection (1) selon l'une quelconque des revendications 2 à 4, dans lequel la deuxième extrémité (8, 9) de la troisième branche conductrice est intercalée entre les deuxièmes extrémités (7, 8) des première et deuxième branches conductrices et dans lequel le dispositif de rappel comporte un organe de rappel (13) exerçant sur la deuxième extrémité (8, 9) de la troisième branche conductrice un effort tendant à éloigner ladite deuxième extrémité (8, 9) de la troisième branche conductrice des deuxièmes extrémités (7 et 9, 8) des première et deuxième branches conductrices.

10. Système de protection (1) selon la revendication 9, dans lequel les deuxièmes extrémités (7, 9) des première et deuxième branches conductrices sont placées à distance l'une de l'autre dans la position connectée.

11. Système de protection (1) selon la revendication 10, dans lequel l'élément thermofusible (3) est une bille d'alliage solide à base d'étain assurant une connexion électrique entre les deuxièmes extrémités (7, 8) des première et deuxième branches conductrices et recouverte par un matériau thermofusible (6) apte à fondre lors d'une élévation de température et à se répartir sur l'une des bornes (5) de l'un et/ou l'autre des premier et deuxième éléments de protection (2) sensibles à la tension lors d'une élévation de température afin d'augmenter la mouillabilité de ladite borne (5) pour l'alliage d'étain fondu.

12. Système de protection (1) selon la revendication 9, dans lequel le dispositif de rappel comporte en outre un organe de rappel (113) exerçant sur la deuxième extrémité (9) de la deuxième branche conductrice un effort tendant à éloigner la deuxième extrémité (9) de la deuxième branche conductrice de la deuxième extrémité (8) de la première branche conductrice.

13. Système de protection (1) selon la revendication 1, dans lequel le dispositif de déconnexion thermosensible comporte un premier et un deuxième éléments thermofusibles (3), le premier élément thermofusible étant disposé entre une première portion et une deuxième portion de la première branche conductrice ; la première portion et la deuxième portion comportant respectivement la première extrémité (14, 15, 16) et la deuxième extrémité (7, 8, 9) de la première branche conductrice;
le deuxième élément thermofusible étant disposé entre une première portion et une deuxième portion de la deuxième branches conductrice ; la première portion et la deuxième portion comportant respectivement la première extrémité (14, 15, 16) et la deuxième extrémité (7, 8, 9) de la deuxième branche conductrice;
le dispositif de rappel comportant un premier organe de rappel (113) exerçant sur la deuxième portion de la première branche conductrice un effort tendant à l'éloigner de la première portion de la première branche conductrice de manière à séparer la première portion de la deuxième portion de la première branche conductrice lors de la fusion du premier élément thermofusible (3) et un deuxième organe de rappel (113) exerçant sur la deuxième portion de la deuxième branche conductrice un effort tendant à l'éloigner de la première portion de la deuxième branche conductrice de manière à séparer la première portion de la deuxième portion de la deuxième branche conductrice lors de la fusion du deuxième élément thermofusible (3) ; la deuxième extrémité (9) de la troisième branche conductrice étant en position connectée prise en sandwich entre les deuxièmes extrémités (7, 8) des première et deuxième branches conductrices ; le dispositif de rappel comportant en outre un troisième organe de rappel (13) exerçant sur la deuxième extrémité (9) de la troisième branche un effort tendant à éloigner la deuxième extrémité (9) de la troisième branche conductrice des deuxièmes extrémités (7, 8) de la première et de la deuxième branche conductrice de manière à déplacer la deuxième extrémité (9) de la troisième branche conductrice par rapport aux deuxièmes extrémités (7, 8) des première et deuxième branches conductrices lorsqu'en raison de la fusion de l'un et/ou l'autre des deux éléments thermofusibles (3) la deuxième extrémité (9) de la troisième branche conductrice n'est plus prise en sandwich entre les deuxièmes extrémités (7, 8) des première et deuxième branches conductrices.

14. Système de protection (1) selon la revendication 13, dans lequel la première et la deuxième branches conductrices comportent un troisième et un quatrième éléments de protection (2 et 4) sensibles à la tension, le premier et le deuxième éléments de protection (2 et 4) sensibles à la tension étant respectivement disposés sur la première portion de la première et de la deuxième branches conductrices et le troisième et la quatrième éléments de protection (2, 4) sensibles à la tension étant respectivement disposés sur la deuxième portion de la première et de la deuxième branches conductrices.

15. Système de protection selon la revendication 14, dans lequel le premier élément thermofusible (3) est fixé entre l'une des bornes du premier élément de protection (2) sensible à la tension et l'une des bornes du troisième élément de protection (4) sensible à la tension et dans lequel le deuxième élément thermofusible est fixé entre l'une des bornes du deuxième élément de protection (2, 4) sensible à la tension et l'une des bornes du quatrième élément de protection sensible à la tension.

16. Système de protection selon l'une quelconque des revendications 1 à 15, dans lequel les éléments de protection sensibles à la tension sont choisis parmi les varistances (2) et les éclateurs à gaz (4).

17. Système de protection selon l'une quelconque des revendications précédentes, dans lequel la première extrémité (14) de la première branche conductrice est destinée à être raccordée à la phase (L).

18. Système de protection selon l'une quelconque des revendications précédentes, dans lequel la première extrémité (15, 16) de la deuxième branche conductrice est destinée à être raccordée au neutre (N) ou à la masse (M).

## Patentansprüche

1. Schutzsystem (1) gegen vorübergehende Überspannungen, die bestimmt ist zur Anordnung als Bypass für zu schützende Einrichtungen, wobei das Schutzsystem mindestens drei Leitungen (L, N, M) umfasst, die aus einer ersten Leitung (L), einer zweiten Leitung (N) und einer Masse (M) bestehen; wobei das Schutzsystem (1) umfasst:
- einen ersten, einen zweiten und einen dritten leitenden Zweig, die bestimmt sind für den jeweiligen Anschluss an die drei Leitungen (L, N, M) und die jeweils ein erstes Ende (14, 15, 16) für den Anschluss an eine der drei Leitungen (L, N, M) aufweisen
und ein zweites Ende (7, 8, 9), das an das zweite Ende (7, 8, 9) der zwei anderen leitenden Zweige anschließbar ist;
- wobei der erste und der zweite leitende Zweig mit einem ersten (2) und einem zweiten spannungsempfindlichen Schutzelement (2, 4) versehen sind, wobei das erste und das zweite spannungsempfindliche Schutzelement jeweils zwei Klemmen (5, 10; 11, 12) aufweisen und ausgebildet sind zum Ermöglichen eines Stromflusses zwischen dem ersten und dem zweiten Ende (7, 14) des jeweiligen leitenden Zweiges, wenn die Spannung zwischen den beiden Klemmen oberhalb einer Spannungsschwelle liegt, und zum Verhindern eines Stromflusses zwischen dem ersten und dem zweiten Ende (7, 14) des jeweiligen leitenden Zweiges, wenn die Spannung zwischen den beiden Klemmen unterhalb der Spannungsschwelle liegt; wobei jedes spannungsempfindliche Schutzelement (2, 4) ferner geeignet ist für einen Temperaturanstieg, wenn die Spannung zwischen seinen Klemmen (5, 10) oberhalb der Spannungsschwelle liegt; und
- eine wärmeempfindliche Trenneinrichtung mit mindestens einem wärmeschmelzbaren Element (3), das sich mit mindestens einem des ersten und zweiten spannungsempfindlichen Schutzelements (2, 4) in Wärmekontakt befindet; wobei das wärmeschmelzbare Element (3) bei Raumtemperatur elektrisch leitfähig ist und oberhalb einer Temperaturschwelle schmelzfähig ist; wobei das Schutzsystem **dadurch gekennzeichnet ist, dass** das wärmeschmelzbare Element (3) derart ausgebildet ist, dass dieses die zweiten Enden (7, 8, 9) der drei Zweige in einer verbundenen Position hält, in der eine elektrische Verbindung zwischen den zweiten Enden (7, 8, 9) des ersten, des zweiten und des dritten leitenden Zweiges sichergestellt ist; wobei die wärmeempfindliche Trenneinrichtung eine elastische Rückstelleinrichtung umfasst, die eine Kraft ausübt, die versucht, den ersten, den zweiten und den dritten leitenden Zweig in eine unterbrochene Position zu bringen, in der die zweiten Enden (7, 8, 9) des ersten, des zweiten und des dritten leitenden Zweiges derart voneinander beabstandet sind, dass der erste, der zweite und der dritte Zweig bei einem Schmelzen des wärmeschmelzbaren Elements (3) gleichzeitig voneinander getrennt werden.

2. Schutzsystem (1) nach Anspruch 1, wobei die zweiten Enden (7, 8, 9) des ersten, des zweiten und des dritten leitenden Zweiges durch das wärmeschmelzende Element (3) aneinander befestigt sind.

3. Schutzsystem (1) nach Anspruch 1 oder 2, wobei der dritte leitende Zweig mit einem dritten spannungsempfindlichen Schutzelement versehen ist, das zwei Klemmen hat, die ausgebildet sind zum Ermöglichen eines Stromflusses zwischen dem ersten und dem zweiten Ende des dritten leitenden Zweiges, wenn die Spannung zwischen den beiden Klemmen oberhalb einer Spannungsschwelle liegt, und zum Verhindern des Stromflusses zwischen dem ersten und dem zweiten Ende des leitenden Zweiges, wenn die Spannung zwischen den beiden Klemmen unterhalb der Spannungsschwelle liegt; und das ferner geeignet ist für einen Temperaturanstieg, wenn die Spannung seiner Klemmen oberhalb der Spannungsschwelle liegt.

4. Schutzsystem (1) nach Anspruch 2 oder 3, wobei die beiden Enden (7, 8, 9) des ersten, des zweiten und des dritten leitenden Zweiges sich in einem Abstand voneinander bewegen können.

5. Schutzsystem (1) nach Anspruch 4, wobei die Rückstelleinrichtung eine Trennklappe umfasst, die an der Stelle der Befestigung der zweiten Enden (7, 8, 9) der drei leitenden Zweige elastisch an diese zweiten Enden gedrückt wird, um eine Kraft auszuüben, die versucht, die zweiten Enden (7 und 9, 8) der drei leitenden Zweige voneinander weg zu bewegen.

6. Schutzsystem (1) nach Anspruch 5, wobei das erste und das zweite Schutzelement auf beiden Seiten der Trennklappe angeordnet sind.

7. Schutzsystem (1) nach einem der Ansprüche 4 bis 6, wobei der erste und der zweite leitende Zweig auf beiden Seiten der Trennklappe angeordnet sind.

8. Schutzsystem (1) nach einem der Ansprüche 4 bis 7, wobei zwei der drei leitenden Zweige in einer Richtung parallel zueinander angeordnet sind und der letzte der drei leitenden Zweige in einer Richtung senkrecht zu den anderen leitenden Zweigen angeordnet ist, wobei die zweiten Enden jedes der leitenden Zweige derart zueinander geneigt sind, dass sie durch das wärmeschmelzbare Element zusammengehalten werden, und wobei die Trennklappe ein abgeschrägtes Profil mit drei zueinander rechtwinkligen Schrägen aufweist, so dass dieses Profil komplementär ist zu der Anordnung, die durch die Neigung jedes der zweiten Enden der leitenden Zweige gebildet wird, und geeignet ist, sich beim Schmelzen des wärmeschmelzbaren Elements zwischen die drei zweiten Enden der leitenden Zweige einzufügen.

9. Schutzsystem (1) nach einem der Ansprüche 2 bis 4, wobei das zweite Ende (8, 9) des dritten leitenden Zweiges zwischen den zweiten Enden (7, 8) des ersten und des zweiten leitenden Zweiges eingefügt ist und wobei die Rückstelleinrichtung ein Rückstellelement (13) umfasst, das auf das zweite Ende (8, 9) des dritten leitenden Zweiges ein Kraft ausübt, die versucht, das zweite Ende (8, 9) des dritten leitenden Zweiges von den zweiten Enden (7 und 8, 9) des ersten und des zweiten leitenden Zweiges weg zu bewegen.

10. Schutzsystem (1) nach Anspruch 9, wobei die zweiten Enden (7, 9) des ersten und des zweiten leitenden Zweiges in der verbundenen Position in einem Abstand voneinander angeordnet sind.

11. Schutzsystem (1) nach Anspruch 10, wobei das wärmeschmelzbare Element (3) eine massive Kugel aus einer Legierung auf Zinnbasis ist, die eine elektrische Verbindung zwischen den beiden zweiten Enden (7, 8) des ersten und des zweiten leitenden Zweiges sicherstellt und mit einem wärmeschmelzbaren Material (6) beschichtet ist, das bei einem Temperaturanstieg schmelzen kann und sich bei einem Temperaturanstieg auf einer der Klemmen (5) des einen und/oder des anderen des ersten und des zweiten spannungsempfindlichen Schutzelements (2) verteilen kann, um die Benetzbarkeit der Klemme (5) für die geschmolzene Zinnlegierung zu erhöhen.

12. Schutzsystem (1) nach Anspruch 9, wobei die Rückstelleinrichtung ferner ein Rückstellelement (113) umfasst, das auf das zweite Ende (9) des zweiten leitenden Zweiges eine Kraft ausübt, die versucht, das zweite Ende (9) des zweiten leitenden Zweiges von dem zweiten Ende (8) des ersten leitenden Zweiges weg zu bewegen.

13. Schutzsystem (1) nach Anspruch 1, wobei die wärmeempfindliche Trenneinrichtung ein erstes und ein zweites wärmeschmelzbares Element (3) umfasst, wobei das erste wärmeschmelzbare Element zwischen einem ersten Bereich und einem zweiten Bereich des ersten leitenden Zweiges angeordnet ist; wobei der erste Bereich und der zweite Bereich jeweils das erste Ende (14, 15, 16) und das zweite Ende (7, 8, 9) des ersten leitenden Zweiges umfassen;
wobei das zweite wärmeschmelzbare Element zwischen einem ersten Bereich und einem zweiten Bereich des zweiten leitenden Zweiges angeordnet ist; wobei der erste Bereich und der zweite Bereich jeweils das erste Ende (14, 15, 16) und das zweite Ende (7, 8, 9) des zweiten leitenden Zweiges umfassen;
wobei die Rückstelleinrichtung ein erstes Rückstellelement (113) umfasst, das auf den zweiten Bereich des ersten leitenden Zweiges eine Kraft ausübt, die versucht, diesen von dem ersten Bereich des ersten leitenden Zweiges derart zu entfernen, dass der erste Bereich von dem zweiten Bereich des ersten leitenden Zweiges getrennt wird, wenn das erste wärmeschmelzbare Element (3) schmilzt, und ein zweites Rückstellelement (113), das auf den zweiten Bereich des zweiten leitenden Zweiges eine Kraft ausübt, die versucht, diesen von dem ersten Bereich des zweiten leitenden Zweiges derart zu entfernen, dass der erste Bereich von dem zweiten Bereich des zweiten leitenden Zweiges getrennt wird, wenn das zweite wärmeschmelzbare Element (3) schmilzt; wobei sich das zweite Ende (9) des dritten leitenden Zweiges in der verbundenen Position sandwichartig zwischen den zweiten Enden (7, 8) des ersten und des zweiten leitenden Zweiges befindet;
wobei die Rückstelleinrichtung ferner ein drittes Rückstellelement (13) umfasst, das auf das dritte Ende (9) des dritten Zweiges eine Kraft ausübt, die versucht, das dritte Ende (9) des dritten leitenden Zweiges von den zweiten Enden (7, 8) des ersten und des zweiten leitenden Zweiges derart zu entfernen, dass das zweite Ende (9) des dritten leitenden Zweiges relativ zu den zweiten Enden (7, 8) des ersten und des zweiten leitenden Zweiges bewegt wird, wenn aufgrund des Schmelzens des einen und/oder des anderen der beiden wärmeschmelzbaren Elemente (3) das zweite Ende (9) des dritten leitenden Zweiges nicht mehr sandwichartig zwischen den zweiten Enden (7, 8) des ersten und des zweiten leitenden Zweiges aufgenommen ist.

14. Schutzsystem (1) nach Anspruch 13, wobei der erste und der zweite leitende Zweig ein drittes und ein viertes spannungsempfindliches Schutzelement (2 und 4) umfassen, wobei das erste und das zweite spannungsempfindliche Schutzelement (2 und 4) jeweils an dem ersten Bereich des ersten und des zweiten leitenden Zweiges und das dritte und das vierte spannungsempfindliche Schutzelement (2, 4) jeweils an dem zweiten Bereich des ersten und des zweiten leitenden Zweiges angeordnet sind.

15. Schutzsystem nach Anspruch 14, wobei das erste wärmeschmelzbare Element (3) zwischen einer der Klemmen des ersten spannungsempfindlichen Schutzelements (2) und einer der Klemmen des dritten spannungsempfindlichen Schutzelements (4) angeordnet ist und wobei das zweite wärmeschmelzbare Element zwischen einer der Klemmen des zweiten spannungsempfindlichen Schutzelements (2, 4) und einer der Klemmen des vierten spannungsempfindlichen Schutzelements angeordnet ist.

16. Schutzsystem nach einem der Ansprüche 1 bis 15, wobei die spannungsempfindlichen Schutzelemente ausgewählt sind aus Varistoren (2) und gasgefüllten Funkenstrecken (4).

17. Schutzsystem nach einem der vorangehenden Ansprüche, wobei das erste Ende (14) des ersten leitenden Zweiges für den Anschluss an die Phase (L) bestimmt ist.

18. Schutzsystem nach einem der vorangehenden Ansprüche, wobei das erste Ende (15, 16) des zweiten leitenden Zweiges für den Anschluss an den Nullleiter (N) oder an die Masse (M) bestimmt ist.

## Claims

1. Transient overvoltage protection system (1) intended to be positioned in parallel to an equipment item to be protected, the protection system comprising at least three lines (L, N, M) consisting of a first line (L), a second line (N) and a ground (M); the protection system (1) comprising:
- a first, a second and a third conductive branches which are intended to be connected respectively to the three lines (L, N, M) and of which each comprises a first end (14, 15, 16) intended to be connected to one of the three lines (L, N, M) and a second end (7, 8, 9) that can be connected to the second end (7, 8, 9) of the other two conductive branches (L, N, M);
- the first and the second conductive branches being equipped with a first (2) and a second (2, 4) voltage-sensitive protection elements; each of the first and second voltage-sensitive protection elements having two terminals (5, 10; 11, 12) and being arranged to allow a flow of current between the first and the second ends (7, 14) of the respective conductive branch when the voltage between said two terminals is higher than a voltage threshold and to inhibit a flow of current between the first and the second ends (7, 14) of the respective conductive branch when the voltage between said two terminals is lower than the voltage threshold; each voltage-sensitive protection element (2, 4) also being able to rise in temperature when the voltage between its terminals (5, 10) is higher than said voltage threshold; and
- a thermally sensitive disconnection device comprising at least one thermofusible element (3) which is in thermal contact with at least one of the first and second voltage-sensitive protection elements (2, 4); the thermofusible element (3) being electrically conductive at ambient temperature and being capable of melting above a temperature threshold; the thermofusible element (3) being arranged so as to keep the second ends (7, 8, 9) of the three branches in a connected position in which an electrical connection is assured between the second ends (7, 8, 9) of the first, second and third conductive branches; the thermally sensitive disconnection device comprising an elastic return device exerting a force tending to bring the first, second and third conductive branches to a disconnected position in which the second ends (7, 8, 9) of the first, second and third conductive branches are placed at a distance from one another so as to simultaneously disconnect the first, second and third branches from one another upon the melting of the thermofusible element (3).

2. Protection system (1) according to Claim 1, in which the second ends (7, 8, 9) of the first, second and third conductive branches are fixed to one another by the thermofusible element (3).

3. Protection system (1) according to Claim 1 or 2, the third conductive branch being equipped with a third voltage-sensitive protection element having two terminals and being arranged to allow a flow of current between the first and the second ends of the third conductive branch when the voltage between said two terminals is higher than a voltage threshold and to inhibit a flow of current between the first and the second ends of the conductive branch when the voltage between said two terminals is lower than the voltage threshold; and being also capable of rising in temperature when the voltage between its terminals is higher than said voltage threshold.

4. Protection system (1) according to Claim 2 or 3, in which the second ends (7, 8, 9) of the first, second and third conductive branches can move away from one another.

5. Protection system (1) according to Claim 4, in which the return device comprises a disconnection flap pressed elastically on to the second ends (7, 8, 9) of the three conductive branches at their fixing point in order to exert a force tending to separate the second ends (7 and 9, 8) of the three conductive branches from one another.

6. Protection system (1) according to Claim 5, in which the first and the second protection elements are positioned on either side of the disconnection flap.

7. Protection system (1) according to any one of Claims 4 to 6, in which the first and the second conductive branches are positioned on either side of the disconnection flap.

8. Protection system (1) according to any one of Claims 4 to 7, in which two of the three conductive branches are positioned in a direction parallel to one another and the last of the three conductive branches is positioned in a direction at right angles to the other two conductive branches, the second ends of each of the conductive branches being inclined to one another so as to be held together by the thermofusible element, and the disconnection flap has a profile bevelled by three slopes at right angles to one another in order for this profile to complement the assembly formed by the inclination of each of the second ends of the conductive branches and capable of being inserted between the three second ends of the conductive branches upon the melting of the thermofusible element.

9. Protection system (1) according to any one of Claims 2 to 4, in which the second end (8, 9) of the third conductive branch is inserted between the second ends (7, 8) of the first and second conductive branches and in which the return device comprises a return member (13) exerting on the second end (8, 9) of the third conductive branch a force tending to separate said second end (8, 9) of the third conductive branch from the second ends (7 and 9, 8) of the first and second conductive branches.

10. Protection system (1) according to Claim 9, in which the second ends (7, 9) of the first and second conductive branches are placed at a distance from one another in the connected position.

11. Protection system (1) according to Claim 10, in which the thermofusible element (3) is a solid tin-based alloy ball ensuring an electrical connection between the second ends (7, 8) of the first and second conductive branches and covered by a thermofusible material (6) capable of melting upon a temperature rise and of being allocated to one of the terminals (5) of one and/or the other of the first and second voltage-sensitive protection elements (2) upon a temperature rise in order to increase the wettability of said terminal (5) for the molten tin alloy.

12. Protection system (1) according to Claim 9, in which the return device further comprises a return member (113) exerting on the second end (9) of the second conductive branch a force tending to separate the second end (9) of the second conductive branch from the second end (8) of the first conductive branch.

13. Protection system (1) according to Claim 1, in which the thermally sensitive disconnection device comprises a first and a second thermofusible elements (3), the first thermofusible element being positioned between a first portion and a second portion of the first conductive branch; the first portion and the second portion respectively comprising the first end (14, 15, 16) and the second end (7, 8, 9) of the first conductive branch;
the second thermofusible element being positioned between a first portion and a second portion of the second conductive branch; the first portion and the second portion respectively comprising the first end (14, 15, 16) and the second end (7, 8, 9) of the second conductive branch;
the return device comprising a first return member (113) exerting on the second portion of the first conductive branch a force tending to separate it from the first portion of the first conductive branch so as to separate the first portion from the second portion of the first conductive branch upon the melting of the first thermofusible element (3) and a second return member (113) exerting on the second portion of the second conductive branch a force tending to separate it from the first portion of the second conductive branch so as to separate the first portion from the second portion of the second conductive branch upon the melting of the second thermofusible element (3); the second end (9) of the third conductive branch being in connected position sandwiched between the second ends (7, 8) of the first and second conductive branches; the return device further comprising a third return member (13) exerting on the second end (9) of the third branch a force tending to separate the second end (9) of the third conductive branch from the second ends (7, 8) of the first and of the second conductive branches so as to move the second end (9) of the third conductive branch in relation to the second ends (7, 8) of the first and second conductive branches when, because of the melting of one and/or the other of the two thermofusible elements (3), the second end (9) of the third conductive branch is no longer sandwiched between the second ends (7, 8) of the first and second conductive branches.

14. Protection system (1) according to Claim 13, in which the first and the second conductive branches comprise a third and a fourth voltage-sensitive protection elements (2 and 4), the first and the second voltage-sensitive protection elements (2 and 4) being respectively positioned on the first portion of the first and of the second conductive branches and the third and the fourth voltage-sensitive protection elements (2, 4) being respectively positioned on the second portion of the first and of the second conductive branches.

15. Protection system according to Claim 14, in which the first thermofusible element (3) is fixed between one of the terminals of the first voltage-sensitive protection element (2) and one of the terminals of the third voltage-sensitive protection element (4) and in which the second thermofusible element is fixed between one of the terminals of the second voltage-sensitive protection element (2, 4) and one of the terminals of the fourth voltage-sensitive protection element.

16. Protection system according to any one of Claims 1 to 15, in which the voltage-sensitive protection elements are chosen from varistors (2) and gas discharge arrestors (4).

17. Protection system according to any one of the preceding claims, in which the first end (14) of the first conductive branch is intended to be connected to the phase (L).

18. Protection system according to any one of the preceding claims, in which the first end (15, 16) of the second conductive branch is intended to be connected to the neutral (N) or to the ground (M).
